# EUROPEAN PATENT SPECIFICATION

(11) **EP 3 146 652 B1**
(45) Date of publication and mention of the grant of the patent: **04.09.2019**
(21) Application number: 15710334.2
(22) Date of filing: 23.02.2015
(51) Int. Cl.: H04B 10/116, H04B 10/114

(54) **LIGHTING AND DATA COMMUNICATION SYSTEM USING A REMOTELY LOCATED LIGHTING ARRAY**
BELEUCHTUNGS- UND DATENKOMMUNIKATIONSSYSTEM UNTER VERWENDUNG EINER BELEUCHTUNGSANORDNUNG MIT ENTFERNTEM STANDORT
SYSTÈME D'ÉCLAIRAGE ET DE COMMUNICATION DE DONNÉES À L'AIDE D'UN RÉSEAU D'ÉCLAIRAGE SITUÉ À DISTANCE

(30) Priority: 20.05.2014 US 201414282385
(43) Date of publication of application: 29.03.2017
(73) Proprietor: The Boeing Company, Chicago, IL 60606-1596 (US)
(72) Inventor: KRUG, William P., Chicago, Illinois 60606 (US)
(74) Representative: Witte, Weller & Partner Patentanwälte mbB
(86) International application number: PCT/US2015/017148
(87) International publication number: WO 2015/178981

(56) References cited:
- US-A1- 2004 149 998
- US-A1- 2006 056 855
- US-A1- 2012 014 639
- KOLEV D ET AL: "Non-directed indoor optical wireless network with a grid of direct fiber coupled ceiling transceivers for wireless epon connectivity", ITU KALEIDOSCOPE: BUILDING SUSTAINABLE COMMUNITIES (K-2013), 2013 PROCEEDINGS OF, IEEE, 22 April 2013 (2013-04-22), pages 1-8, XP032679925, ISBN: 978-1-4673-4676-4 [retrieved on 2013-06-14]
- KE WANG ET AL: "High-speed full-duplex optical wireless communication systems for indoor applications", LASERS AND ELECTRO-OPTICS (CLEO), LASER SCIENCE TO PHOTONIC APPLICATIONS)-CLEO: 2011 - LASER SCIENCE TO PHOTONIC APPLICATIONS- 1-6 MAY 2011, BALTIMORE, MD, USA, IEEE, US, 1 May 2011 (2011-05-01), pages 1-2, XP031891318, ISBN: 978-1-4577-1223-4

## Description

### FIELD

The disclosed system relates to a lighting system and, more particularly, to a lighting system having a source lighting array and a plastic optical fiber (POF) for transmitting visible light generated by the source lighting array to a plurality of specified locations.

### BACKGROUND

Visible light communication (VLC) is a technology in which light emitters transmit information wirelessly using visible light. By applying VLC, electronic devices may wirelessly communicate with one another. VLC is secure to radio frequency (RF) eavesdropping, and may be carried out by modulating relatively low power visible light emitting diodes (LEDs) or laser lighting. Due to these characteristics, it may be especially advantageous to use VLC as a wireless communications medium in an aircraft, where the use of (RF) based devices are restricted, and LED lighting is already present.

LED based lighting systems may offer several energy and reliability advantages over other types of lighting systems such as, for example, incandescent or fluorescent lighting. Therefore, some types of aircraft may utilize an LED based lighting system for illumination in the passenger cabin. While LED based lighting systems do offer some advantages over other types of lighting systems, traditional types of LED lighting systems also have drawbacks. For example, traditional LED lighting modules may require relatively significant heat sinks in order to maintain a proper junction temperature so that the light emitted by the LEDs do not change color. Moreover, it should be noted that an aircraft typically includes numerous LED lighting modules. This is because an LED lighting module may be provided for an area of the ceiling or each individual seat within the passenger cabin of the aircraft. Thus, hundreds of individual LED lighting modules may potentially be used in the passenger cabin of the aircraft. Each LED lighting module requires separate power and control wiring and electronics at the lighting module. As a result, traditional LED lighting systems for illuminating the passenger cabin may be relatively costly to install, package, and maintain. Finally, traditional types of LED lighting systems are not capable of supporting VLC. This is because traditional LEDs are very limited in modulation frequency, and may not be modulated quickly enough to support VLC.

US 2006/056855 A1 according to its abstract states: The present invention has been developed considering the above-described problems and aims to provide various structures and applications for illuminative light communication. According to the first aspect, a broadcast system includes an LED light source 115 for lighting, a power line 103 that supplies electric power to the LED light source 115, a data modulator 102 that modulates and multiplexes a plurality of pieces of data, superimposes the resulting signal on an electric power waveform, and then transmits the resulting superimposed signal waveform to the power line 103, and a filter 112 that selectively separates one or more of a plurality of pieces of modulated data on the power line so as to control light intensity or blinking of the LED light source. Data is transmitted through changes in light intensity or blinking of the LED light source.

An aircraft lighting system using LEDs is for example also known from US 2006/0261970 A1.

### SUMMARY

The above mentioned problems of an aircraft lighting system are overcome by an aircraft lighting system as defined in claim 1.

The disclosed lighting system integrates power, control, modulation, and heat sinking into a single location. Thus, the disclosed lighting system may eliminate the need for hundreds of individual LED lighting modules in the passenger cabin of the aircraft, which each require separate power and control wiring and electronics. As a result, the disclosed lighting system for illuminating the passenger cabin may be less costly to install, package, operate, and maintain when compared to some lighting systems currently available. This is because the disclosed lighting system only requires passive elements, such as plastic optical fiber (POF) cables, to transmit visible light.

Other objects and advantages of the disclosed method and system will be apparent from the following description, the accompanying drawings and the appended claims.

### BRIEF DESCRIPTION OF THE DRAWINGS

FIG. 1 is an illustration of an aircraft and the disclosed lighting system;
FIG. 2 is an illustration of a passenger cabin of the aircraft shown in FIG. 1;
FIG. 3 is a schematic cross-sectioned view of a multi-core plastic optic fiber (POF) cable used in the disclosed lighting system of FIG. 1;
FIG. 4A are schematic diagrams of an exemplary lighting array used in the lighting system shown in FIG. 1, where visible light is transmitted in two directions;
FIG. 4B is a cross-sectioned view of the POF cable of FIG. 4A (taken along section 4B-4B);
FIGS. 4C-4D are a schematic diagram of an alternative approach of the lighting array shown in FIG. 4A, where visible light is transmitted or received in only one direction;
FIG. 4E is a cross-sectioned view of the POF cable of FIGS. 4C-4D (taken along section 4E-4E);
FIG. 5A is a schematic diagram of an alternative example of the lighting array shown in FIG. 4A;
FIG. 5B is a cross-sectioned view of the POF cable of FIG. 5A (taken along section 5B-5B);
FIGS. 5C-5D are schematic diagrams of an alternative approach of the lighting array shown in FIG. 5A, where visible light is transmitted or received in only one direction;
FIG. 5E is a cross-sectioned view of the POF cable of FIGS. 5C-5D taken along section 5E-5E;
FIG. 6 is a schematic diagram of an exemplary wavelength division multiplexing (WDM) optical network; and
FIG. 7 is a schematic diagram of an exemplary spatial division multiplexing (SDM) optical network.

### DETAILED DESCRIPTION

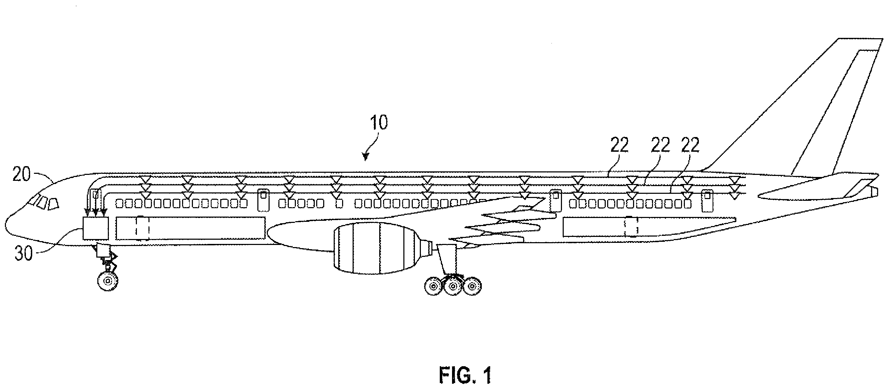

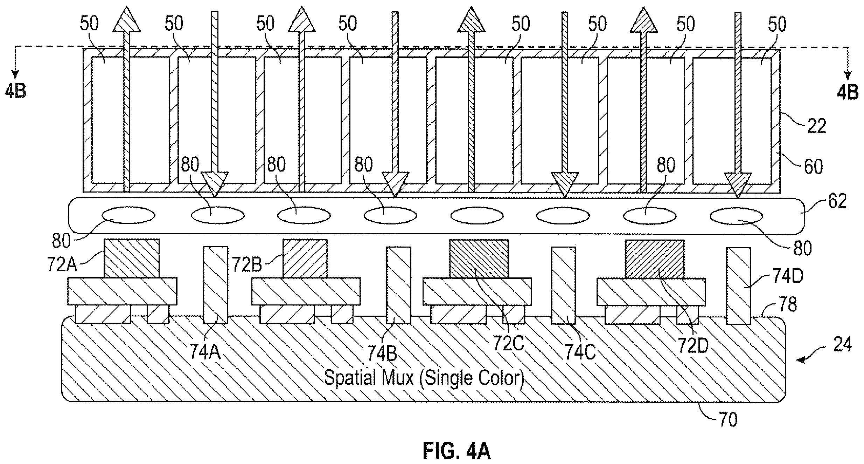

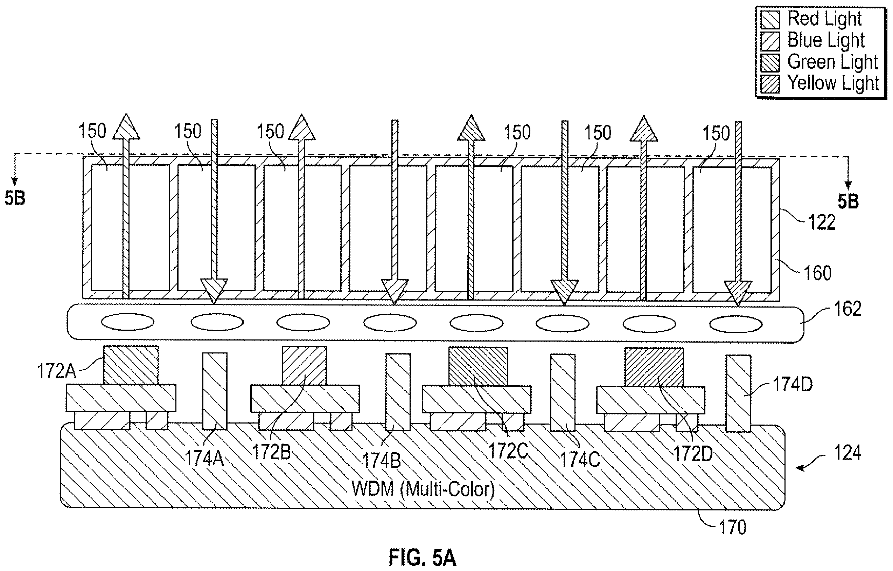

As shown in FIGS. 1-2, the disclosed lighting system 10 according to an aspect of the disclosure may be employed in an aircraft 20. The lighting system 10 may include one or more multi-core plastic optical fiber (POF) cables 22 as well as one or more lighting arrays 24 (illustrated in FIG. 4A) or lighting arrays 124 (illustrated in FIG. 5A). In one approach, the lighting system 10 may be used to illuminate the interior of a passenger cabin 26 of the aircraft 20. The lighting system 10 may also be used to illuminate passenger reading lights located within the passenger cabin 26 of the aircraft 20. The lighting system 10 may also be used to support a visible light communication (VLC) system that is based on the Institute of Electrical and Electronics Engineers (IEEE) standard 802.15.7. The lighting arrays 24 (FIG. 4A) or 124 (FIG. 5A) may be located in a centralized location of the aircraft 20. For example, the lighting arrays 24, 124 may be located within the electrical/electronics (E/E) bay 30 of the aircraft 20. The lighting arrays 24, 124 may act as a centralized source of visible light, and the POF cables 22 may be used to transmit the visible light to multiple locations within the aircraft 20, which are described in greater detail below.

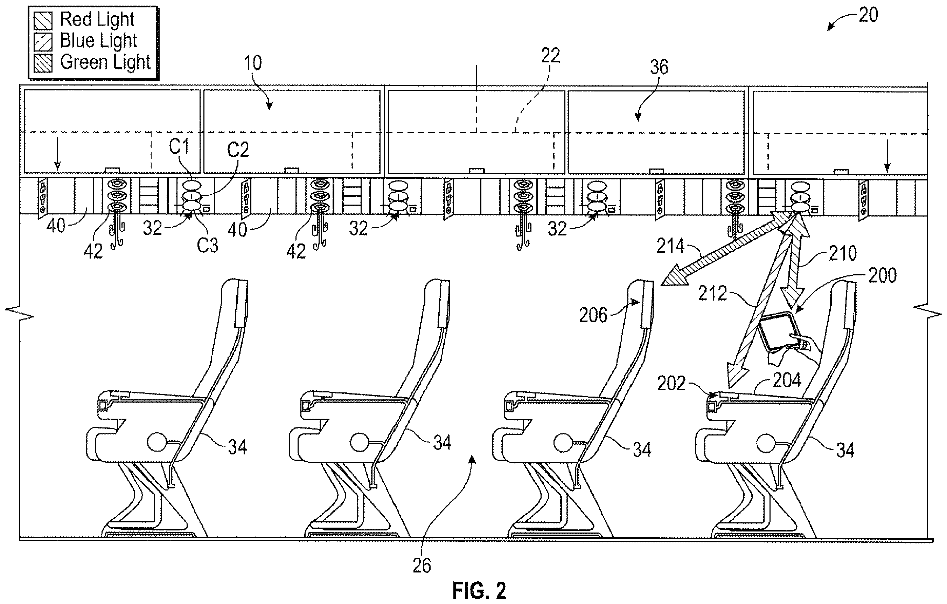

Referring to FIG. 2, a single POF cable 22 may provide light and wireless data communication to a single column of reading lighting units 32 located in the passenger cabin 26 of the aircraft 20. As seen in FIG. 2, there are three columns of reading lights, and are labelled as C1, C2, and C3. In the example as shown, the POF cable 22 provides light and wireless data to the lighting units 32 in column C1. However, it should be noted that light and wireless data may be supplied to the remaining columns C2 and C3 of lighting units 32 through additional POF cables. The lighting units 32 each correspond and provide visible light to a specific seat 34 located within the passenger cabin 26 of the aircraft 20. For example, in the illustration as shown in FIG. 2, the innermost lighting unit 32 (which is illustrated as being activated to transmit visible light) may be used to provide visible light to one of the illustrated seats 34. The POF cable 22 may be routed above the seats 34, within a crown area 36 of the aircraft 20. Specifically, the POF cable 22 may be routed above the passenger service units (PSU) 40 and the environmental control system (ECS) ducting 42 of the aircraft 20.

It should be noted that although FIGS. 1-2 illustrate the lighting system 10 employed in the aircraft 20, those skilled in the art will appreciate that the lighting system 10 may be used in a variety of lighting or wireless communication applications where a remote lighting unit provides illumination and/or data services to various locations. For example, the lighting system 10 may be used in a building such as, for example, an office or a residential home. In another approach, the lighting system 10 may also be used in a vehicle such as, for example, a bus, train, or ship.

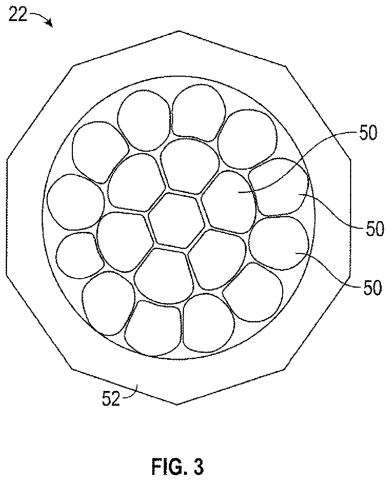

In one approach, the POF cables 22 may each include multiple plastic fibers. FIG. 3 is a cross-sectioned view of an exemplary POF cable 22. As seen in FIG. 3, the POF cable 22 may include a plurality of discrete fiber core elements 50 that are contained within a plastic jacket 52. Each fiber core element 50 may be used to transmit and receive visible light, which is described in greater detail below. In one exemplary approach, the fiber core elements 50 may be constructed of polymethyl methacrylate (PMMA). In one approach, the POF cables 22 may be a generally cylindrical multi-fiber optic cable that possesses the three-dimensional flexibility required for installation within a structure such as the aircraft 20. Specifically, the POF cables 22 may be bent or otherwise manipulated into relatively tight spaces typically found in an aircraft or other structure where the lighting system 10 may be employed. Moreover, the POF cables 22 may also include a relatively high resistance to breakage by elongation as well as a relatively low modulus of elasticity when compared to some other types of fiber optic cables, such as glass optic fiber cables. Thus, the POF cables 22 are especially appropriate for use in the aircraft 20 (FIG. 1) or any other application where fiber optic cables may be stretched during installation or use. Moreover, generally cylindrical multi-fiber cables may permit three-dimensional routing of cabling where relatively tight spaces or turns may be found, unlike planar multi-fiber cables that do not have this capability.

FIG. 4A is a side cross-sectioned view of a single lighting array 24, an end 60 of the POF cable 22, and a focusing lens optic array 62. The lighting array 24 may include a substrate 70, a plurality of lighting elements 72A-72D, and a plurality of photodetection devices 74A-74D. The lighting elements 72A-72D may be any type of light source configured to generate visible light transmitted over one of the fiber core elements 50 of the POF cable 22. If the lighting system 10 also includes VLC capabilities, then the lighting elements 72A-72D may also be capable of being modulated at a frequency of at least about 100 megahertz (MHz) for data transmission purposes. In the exemplary approach as shown in FIG. 4A, the lighting array 24 is a micro-pixelated light emitting diode (LED) array (also referred to as a micro-LED array), where each lighting element 72A-72D may be referred to as a pixel. Alternatively, in another approach, the lighting array 24 may be an array of vertical-cavity surface-emitting laser (VCSEL) elements.

The photodetection devices 74A-74D may include any type of device configured to detect visible light. In one approach, the photodetection devices 74A-74D may be capable of detecting light modulated at a frequency of at least about 100 MHz for data transmission purposes. Some examples of photodetection devices that may be able to detect visible light modulating at a frequency of at least about 100 MHz include, for example, a metal-semiconductor-metal photodetector (MSM detector) or a silicon (Si) photodetector. As discussed in greater detail below, in one approach visible light generated by a VLC capable device located within the passenger cabin 26 (FIG. 2) may be communicated over the POF cable 22, and to the photodetection devices 74A-74D. Thus, in the example as shown in FIG. 4A, the lighting array 24 may not only be used as a light source, but also as a wireless communications medium as well.

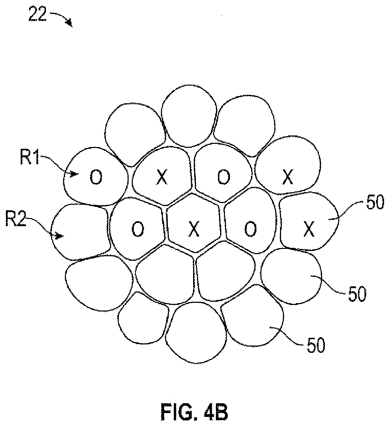

In the example as illustrated in FIG. 4A, and the photodetection devices 74A-74D may be arranged upon the substrate 70 in an alternating manner (i.e., a lighting element is surrounded by photodetection devices). FIG. 4B is a cross-sectioned view of the POF cable 22, taken along section line 4B-4B, where the fiber core elements 50 may be arranged in separate rows R1 and R2. "X" is denoted as visible light oriented towards the lighting array 24 (i.e., the fiber core element 50 transmits light to one of the photodetection devices 74A-74D), and "O" is denoted as visible light oriented away from the lighting array 24 (i.e., the fiber core element 50 transmits light from one of the lighting elements 72A-72D). Referring to both FIGS. 4A and 4B, the fiber core elements 50 situated directly adjacent to one another in the same row have visible light transmitted in the opposite direction. For example, the fiber core elements 50 located in row R1 that transmit light from one of the lighting elements 72A-72D (denoted as "O") are directly adjacent to the fiber core elements 50 that transmit light to one of the photodetection devices 74A-74D (denoted as "X"). Although FIG. 4B illustrates only four fiber core elements 50 in a single row, those skilled in the art will readily appreciate that each fiber core element 50 may be aligned with one of the lighting elements 72A-72D or the photodetection devices 74A-74D.

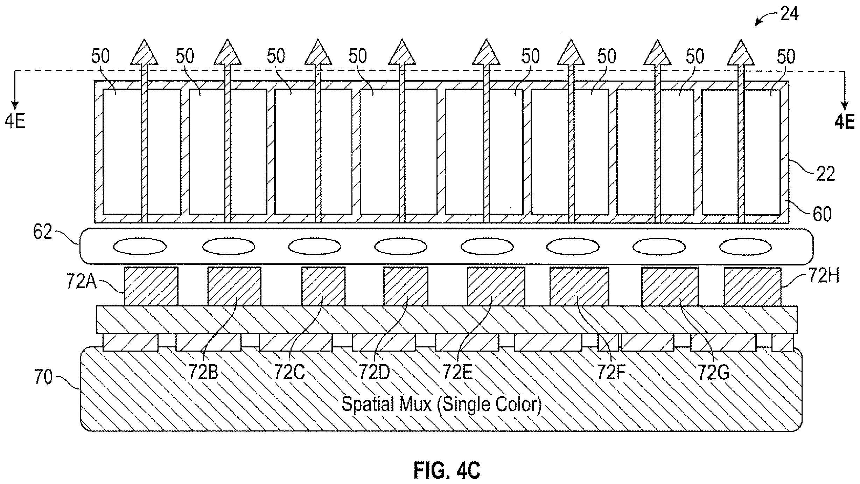

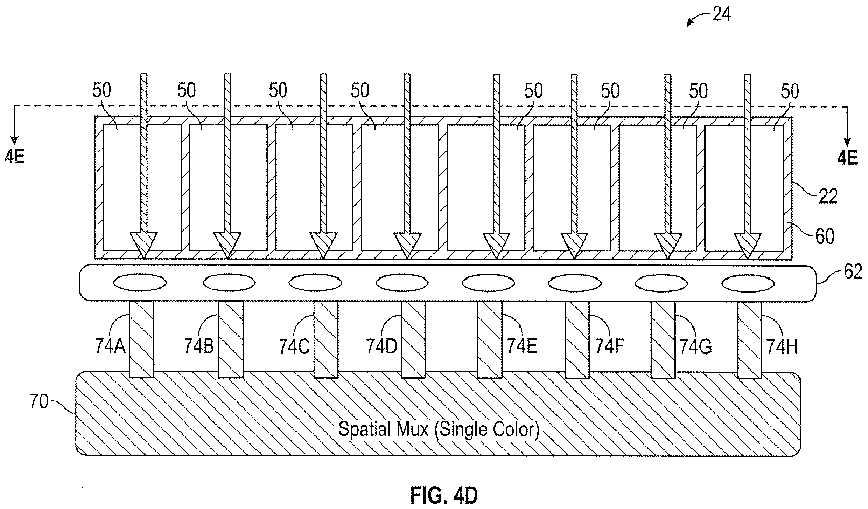

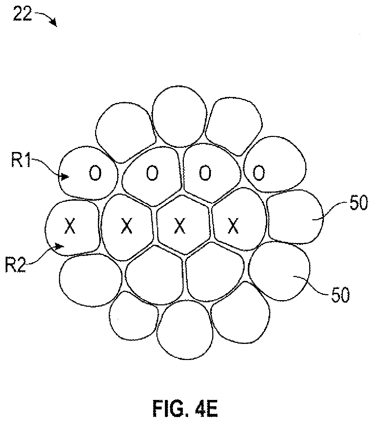

FIGS. 4C-4E illustrate an alternative arrangement of the lighting array 24 where all of the lighting elements or all of the photodetection devices in the same row may transmit light in only one direction. For example, FIG. 4C is an illustration of a row of lighting elements 72A-72H, FIG. 4D is an illustration of a row of photodetection devices 74A-74H, and FIG. 4E is a cross-section view of the POF cable 22, taken along section line 4E-4E. As seen in FIG. 4E, the lighting elements 72A-72H and the photodetection devices 74A-74H may be arranged in a series of alternating rows such that fiber core elements 50 adjacent to one another in the same row transmit light in only one direction. The arrangement as shown in FIGS. 4C-4E may substantially reduce or eliminate the amount of crosstalk between the transmitting devices (the lighting elements 72A-72D) and the receiving devices (the photodetection devices 74A-74D).

Referring back to FIG. 4A, in one approach the substrate 70 may be a semiconductor substrate such as, for example, silicon. The lighting elements 72A-72D and the photodetection devices 74A-74D may be mounted to a surface 78 of the substrate 70 using flipped-chip technology, where light emission and detection features of each lighting element 72A-72D (not shown) are oriented on a side of the substrate 70 to face the end 60 of the POF cable 22. Flipped-chip technology may be used for electrically interconnecting semiconductor devices, such as the lighting elements 72A-72D and the photodetection devices 74A-74D, to one another and to other transmitting and receiving devices located on the substrate 70. Specifically, when using flipped-chip technology, the lighting elements 72A-72D and the photodetection devices 74A-74D may be mounted directly onto the surface 78 of the substrate 70 in a face-down configuration. Bonding the lighting elements 72A-72D and the photodetection devices 74A-74D directly onto the surface 78 of the substrate 70 using flipped-chip technology may provide flexibility in packaging, as the substrate 70 may act as a heat sink as well as a device support. Specifically, the substrate 70 may dissipate heat generated by the lighting elements 72A-72D and the photodetection devices 74A-74D. Additionally, the substrate 70 may also provide support to the lighting elements 72A-72D and the photodetection devices 74A-74D.

The focusing lens optic array 62 may be positioned between the end 60 of the POF cable 22, and the lighting array 24. The focusing lens optic array 62 may include an array of micro-lenses 80, where each micro-lens 80 corresponds to either a single lighting element 72 or photodetector 74. The micro-lens 80 may focus light generated by one of the lighting elements 72 to a corresponding one of fiber core elements 50 of the POF cable 22. Alternatively, the micro-lens 80 may focus light received from the end 60 of one of fiber core elements 50 of the POF cable 22 to a corresponding one of the photodetector elements 74. Thus, an individual fiber core 50 of the POF cable 22 may be used to transmit visible light generated by one of the lighting elements 72. Alternatively, an individual fiber core 50 may also be used to transmit visible light from the interior of the passenger cabin 26 (FIG. 2) to one of the photodetector elements 74.

Those skilled in the art will readily appreciate that the circuitry and POF cables illustrated in FIGS. 4A-4E may also be employed in one or more VLC-capable devices located in the passenger cabin 26 (FIG. 2) of the aircraft 20. For example, FIG. 2 illustrates a portable electronic device 200 (e.g., a tablet computer) held by a passenger, an aircraft lighting controller 202 located along an armrest 204 of the seat 34, and an in-seat tablet display 206, which are described in greater detail below.

In one approach, the micro-LED or VCSEL lighting elements 72A-72D may be modulated by complementary metal-oxide-semiconductor (CMOS) electronics (not illustrated). Moreover, the CMOS electronics may be integrated into an optical receiver coupled to transimpedance devices (not illustrated) to the photodetection devices 74A-74D. The CMOS electronics may be mounted directly to the substrate 70. In one approach, a CMOS optical transceiver may contain both transmitter and receiver circuits, where CMOS electronics may drive signals at transmitters and process signals at receivers. In particular, the CMOS electronics may be used to directly modulate one or more optical signals at source transmitters (e.g., the lighting elements 72A-72D) and process optical signals detected at a destination receiver (e.g., the photodetector elements 74A-74D). In one approach, the CMOS electronics may be used to modulate the lighting elements 72A-72D in accordance with VLC standards (i.e., IEEE standard 802.15.7). The CMOS electronics may control or modulate the lighting elements 72A-72D in accordance with VLC standards in response to visible light detected by the photodetection devices 74A-74D. The visible light detected by the photodetection devices 74A-74D may be visible light generated by the portable electronic device 200, the aircraft lighting controller 202, or the in-seat tablet display 206 located within the passenger cabin 26 of the aircraft 20 (shown in FIG. 2).

In the example as shown in FIGS. 4A-4E, the lighting elements 72A-72D of the lighting array 24 each emit visible light of substantially the same frequency in order to produce light of the same color. For example, the lighting elements 72A-72D may each be blue Gallium nitride (GaN) micro-LEDs that emit blue colored light. Thus, because each LED emits light of substantially the same frequency, spatial multiplexing may be used to transmit visible light to and from the lighting array 24. Although FIG. 4A illustrates the lighting elements 72A-72D as emitting the same color of light, it is to be understood that the lighting array 24 may also include lighting elements 72 each emitting a different colored light, and is described in greater detail below and shown in FIG. 5A.

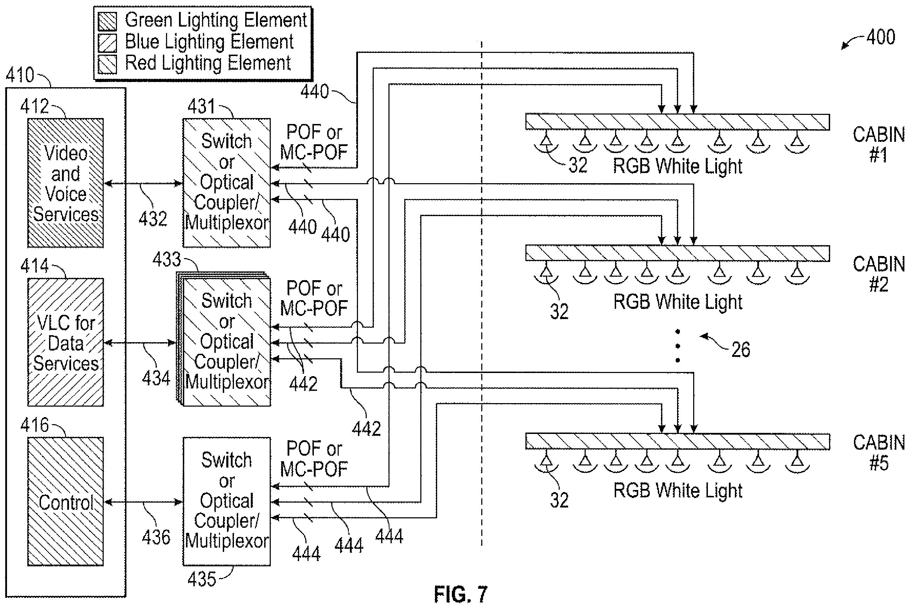

Spatial division multiplexing (SDM) is a transmission technique where the three-dimensional space of a multi-core fiber cable is used to support multiplexing of multiple separate optical channels into independent parallel optical cores of an optical fiber cable, without cross-talk between the optical cores. An optical coupler or multiplexer, which is incorporated into an exemplary SDM optical network 400 as an optical coupler or multiplexing circuit 430, is illustrated in FIG. 7. The optical coupler or multiplexing circuit 430 may be used to combine the outputs of multiple fiber core elements into a single fiber core element, or allow fan-out or broadcast from one fiber core element to multiple fiber core elements. These multiple fiber core elements may be part of a passive optical network. An optical switch may be used to allow switching from one fiber core element to another fiber core element in a switched optical network.

Three-dimensional optical fan-out technology is available from Optoscribe Ltd., of Livingston, United Kingdom. Three-dimensional optical fan-out technology may be used to optically interconnect the interface of multi-core fiber cables to an optical coupler or optical multiplexer of an SDM optical network. For example, referring to FIG. 7, three-dimensional optical fan-out technology may be used to optically interconnect the optical coupler or multiplexing circuit 430 to one or more multi-core POF cables 440, 442, and 444.

Turning now to FIG. 5A, an alternative illustration of another lighting array 124, an end 160 of a POF cable 122, and a focusing lens optic array 162 is shown. The lighting array 124 may include a substrate 170, a plurality of lighting elements 172A-172D, and a plurality of photodetection devices 174A-174D. In the example as shown in FIG. 5A, each lighting element 124 emits visible light of different frequencies in order to produce light of different colors. For example, lighting element 172A emits red light, lighting element 172B emits blue light, lighting element 172C emits green light, and lighting element 172D emits yellow light. Thus, because the lighting array 124 generates visible light of different frequencies, wavelength-division multiplexing (WDM) may be used as a transmission technique.

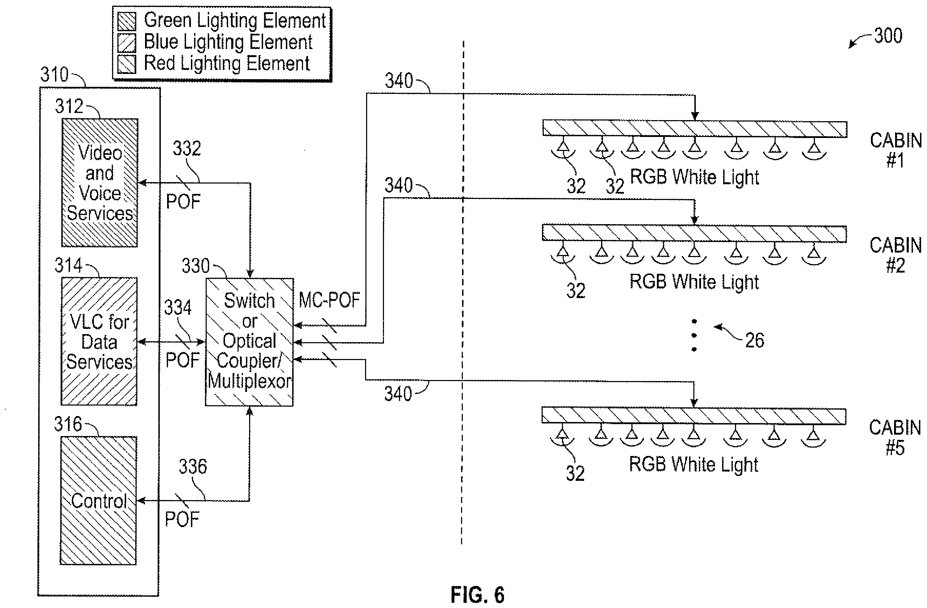

In a WDM optical network, optical wavelength multiplexers may be used to combine different colored lights from outputs of single fiber core elements, and insert the output into another fiber core element. Similarly, optical wavelength demultiplexers may be used to separate different colored lights from a single fiber core element and insert the various colors into other fiber core elements. Alternatively, wavelength optical filters may be used to select specific optical colors of light in a fiber core element in order to support a color-specific device or service. These elements may be part of an exemplary WDM optical network such as, for example, a WDM optical network 300 illustrated in FIG. 6.

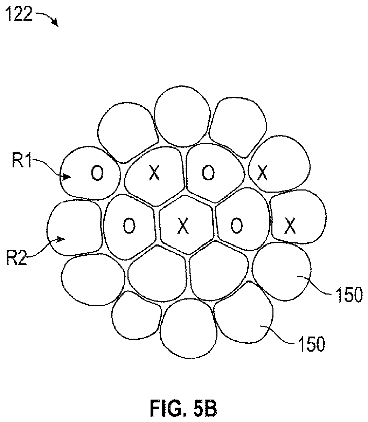

Continuing to refer to FIG. 5A, photodetection device 174A detects red light, photodetection device 174B detects blue light, photodetection device 174C detects green light, and photodetection device 174D detects yellow light. Similar to the approach as shown in FIG. 4A, the lighting elements 172A-172D and the photodetection devices 174A-174D may be arranged upon the substrate 170 in an alternating manner with respect to one another (i.e., a lighting element is surrounded by photodetection devices). FIG. 5B is a cross-sectioned view of the POF cable 122, taken along section line 5B-5B, where the fiber core elements 150 may be arranged in separate rows R1 and R2.

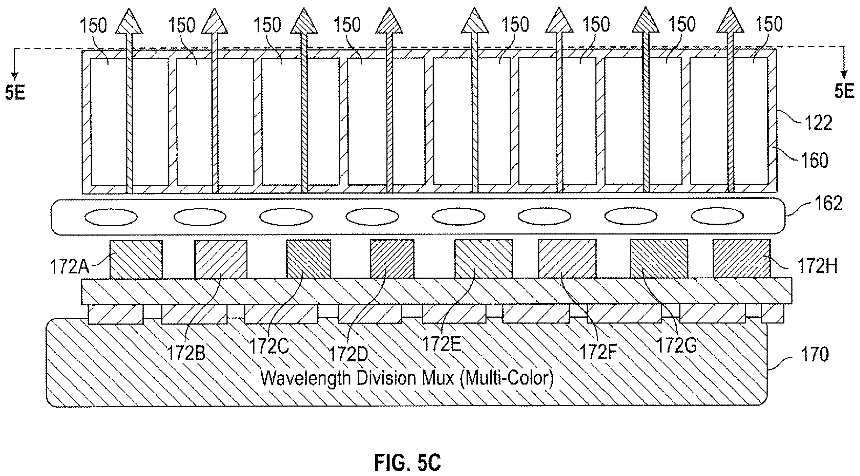

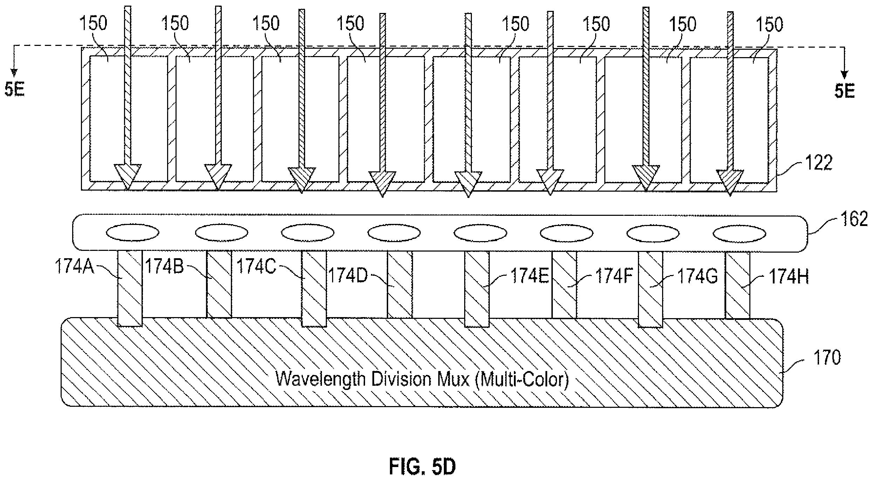

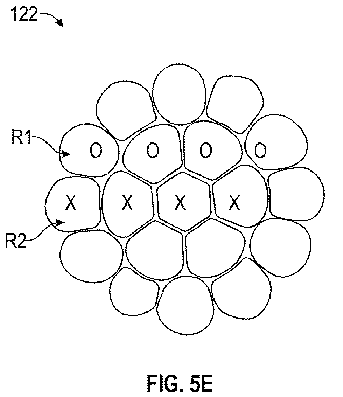

FIGS. 5C-5E illustrate an alternative arrangement of the lighting array 124 where all of the lighting elements or all of the photodetection devices in the same row may transmit light in only one direction. For example, FIG. 5C is an illustration of a row of lighting elements 172A-172H, FIG. 5D is an illustration of a row of photodetection devices 174A-174H, and FIG. 5E is a cross-section view of the POF cable 122, taken along section line 5E-5E. As seen in FIG. 5C, all of the lighting elements 172 of the same color may be separated from one another in a periodic arrangement in order to substantially reduce or eliminate cross-talk between signals of the same color of light.

FIG. 5E illustrates the lighting elements 172A-172H and the photodetection devices 174A-174H arranged in a series of alternating rows such that fiber core elements 150 adjacent to one another in the same rows R1 and R2 transmit light in only one direction. Similar to the approach as shown in FIG. 4E, the arrangement as shown in FIG. 5E may reduce or substantially eliminate the amount of crosstalk between the transmitting devices (the lighting elements 172A-172D) and the receiving devices (the photodetection devices 172A-172D).

Referring to FIGS. 2 and 5A, WDM may be especially useful if multiple VLC-capable devices are located within the passenger cabin 26 of the aircraft 20. In particular, a specific wavelength or color of light may be assigned to a unique VLC-capable device located within the passenger cabin 26 of the aircraft 20. For example, FIG. 2 illustrates the portable electronic device 200 (e.g., a tablet computer) held by a passenger, the aircraft lighting controller 202 located along an armrest 204 of the seat 34, and the in-seat tablet display 206. If WDM is used, then the lighting system 10 may communicate wirelessly with the portable electronic device 200 using a first colored light, the aircraft lighting controller 202 using a second colored light, and the in-seat tablet display 206 simultaneously using a third colored light without interference, as each differently colored light operates at a unique frequency. For example, the portable electronic device 202 communicates with the lighting system 10 in the aircraft 20 using red light 210, the aircraft lighting controller 202 communicates with the lighting system 10 using blue light 212, and the in-seat tablet display 206 communicates using green light 214.

Referring to FIG. 2, in one approach, each lighting unit 32 of the lighting system 10 may include one or more lenses (not illustrated). The lenses may be constructed of a transparent material, such as plastic, and are shaped so as to focus visible rays of light that pass through and minimize reflection. The lenses may be in communication with an end (not shown in FIG. 2) of the POF cable 22. Thus, visible light present in the passenger cabin 26 may be collected by the lenses, and focused or communicated to the end 160 of the POF cable 122 (FIG. 5A). The visible light may be transmitted over the POF cable 122 and back to one or more of the photodetection devices 174A-174D (FIG. 5A). In one approach, one or more diffusion or fly-eye like lenses may be used to overcome any line-of-sight issues the lighting unit 32 may experience when visible light within the passenger cabin 26 is transmitted to the POF cable 22. Specifically, the use of a diffusion or fly-eye like lens may reduce or eliminate any line-of-sight blockages that the lighting unit 32 may experience as individuals move about the passenger cabin 26.

Turning now to FIG. 6, a schematic illustration of the exemplary WDM optical network 300 for transmitting visible light is illustrated. The WDM optical network 300 may also include VLC capabilities. The WDM optical network 300 may include a lighting array 310, which includes an array of green lighting elements 312, an array of blue lighting elements 314, and an array of red lighting elements 316.

The WDM optical network 300 may also include the optical coupler or multiplexing circuit 330, which is shared between the various lighting arrays 312, 314, and 316. Specifically, the array of green lighting elements 312, the array of blue lighting elements 314, and the array of red lighting elements 316 may each be in communication with the optical circuit 330 using respective POF cables. For example, the array of green lighting elements 312 may transmit visible light to the optical circuit 330 using a POF cable 332, the array of blue lighting elements 314 may transmit visible light to the optical circuit 330 using a POF cable 334, and the array of red lighting elements 316 may transmit visible light to the optical circuit 330 using a POF cable 336. Those skilled in the art will appreciate that although the POF cables 332, 334, and 336 are typically multi-fiber cables when implemented, a single fiber core used to broadcast each color of light may be used as well. In the example as shown, the array of green lighting elements 312 may be modulated in accordance with VLC standards (i.e., IEEE standard 802.15.7) in order to communicate video and voice services. Similarly, the array of blue lighting elements 314 may be modulated in accordance with VLC standards to communicate data services, and the red lighting elements 316 may be modulated in accordance with VLC standards to communicate lighting control (i.e., dimming, and on/off control of the lighting units 32 in the passenger cabin 26 shown in FIG. 2).

In the approach as shown in FIG. 6, each POF cable 340 corresponds to a column of lighting units 32 in the aircraft 20, where the column of lighting units 32 may be labeled in FIG. 6 as 'Cabin#1', 'Cabin#2', 'Cabin#5'. The optical circuit 330 may be configured to transmit visible light generated by one or more of the lighting element arrays 312, 314, and 316 through the POF cables 340, and to a plurality of specific locations. In particular, the plurality of specific locations may be the lighting elements 32 located within the passenger cabin 26.

The optical circuit 330 may include an optical switch (not illustrated) and/or an optical coupler or multiplexer. The optical switch enables signals in the POF cables 332, 334, and 336 to be selectively switched between one another. For example, the aircraft 20 (FIG. 1) may have mood lighting capabilities, where only one specific color of light (e.g., red light) may be transmitted throughout the passenger cabin 26 (FIG. 2). For example, the optical switch may selectively enable only red visible light generated by the array of red lighting elements 316 to be transmitted to the passenger cabin 26 of the aircraft 20 (FIG. 2). The optical coupler or multiplexer may combine or couple the different colored lights generated by the arrays 312, 314 and 316 together to create white light. The white light may then be transmitted over the POF cables 340 to the lighting units 32. In the approach as illustrated in FIG. 6, the lighting units 32 each employ a single lens (not illustrated). The single lens may be used to diffuse visible light transmitted from an end (not illustrated) of the POF cable 340. The single lens may also be used to collect visible light in the passenger cabin 26, and focus the visible light to an end of the POF cable 340 (the end of the POF cable 340 is not illustrated in FIG. 6).

FIG. 7 is a schematic illustration of the exemplary SDM optical network 400 for transmitting visible light. The SDM optical network 400 may also include VLC capabilities. The SDM optical network 400 may include a lighting array 410, which includes an array of green lighting elements 412, an array of blue lighting elements 414, and an array of red lighting elements 416. An optical circuit may be allocated for each lighting array, where the array of green lighting elements 412 may transmit visible light to the optical circuit 431 using a POF cable 432, the array of blue lighting elements 414 may transmit visible light to the optical circuit 433 using a POF cable 434, and the array of red lighting elements 416 may transmit visible light to the optical circuit 435 using a POF cable 436.

The optical circuits 431, 433, and 435 may each be in communication with a plurality of lighting units 32 located within the passenger cabin 26 (FIG. 2). However, unlike the approach as shown in FIG. 6, different colored lighting generated by the arrays 412, 414 and 416 may not be combined with a multiplexer together to create white light. However, to a passenger of the aircraft 20, who cannot spatially separate the different colors, the light generated by the lighting units 36 appears as red-green-blue (RGB) white light for illumination. For data communication, POF cables 440 transmit green light from the optical circuit 431 to each lighting unit 32. Likewise, POF cables 442 transmit blue light from the optical circuit 433 to each lighting unit 32, and POF cables 444 transmit red light from the optical circuit 435 to each lighting unit 32. In the approach as illustrated in FIG. 7, the lighting units 32 may each employ three discrete lenses (not illustrated) to create RGB white visible light. The portable electronic device 200, aircraft lighting controller 202, and in-seat tablet display 206 may all use color filters for data links that operate at red, blue, or green colors.

Referring generally to FIGS. 1-7, the disclosed lighting system 10 provides an intelligent, LED-based illumination system that may be used in a variety of applications. Traditional LED-based lighting systems currently available may include numerous individual LED lighting modules that each require a relatively significant heat sink, packaging, and wiring. In contrast, the disclosed lighting system 10 may employ a remotely located lighting array that provides visible light to each lighting unit 32 located within the passenger cabin 26 (shown in FIG. 2). In other words, the disclosed lighting system 10 does not require multiple heat sinks and wiring for each individual lighting unit 32. Thus, the disclosed lighting system 10 includes a centralized source of light (i.e., the lighting array) that generates visible light distributed to various locations within a passenger cabin of an aircraft without the need to include active electronics located within the walls or the ceiling of the passenger cabin of an aircraft.

The lighting system 10 may also include VLC capabilities as well, thereby enabling an aircraft to wirelessly communicate with one or more electronic devices located within the passenger cabin. Thus, the lighting system 10 may provide a simpler, lighter, and more cost-effective system that utilizes less wiring, heat sinking, cables, and connectors when compared to the conventional approaches for lighting and providing data communication an aircraft. Finally, the disclosed lighting system may provide increased harmony with existing onboard systems, reduced installation and maintainance costs, enhanced passenger and crew safety due to reduced radio frequency (RF) exposure, and less electromagnetic interference (EMI).

While the forms of apparatus and methods herein described constitute preferred aspects of this disclosure, it is to be understood that the disclosure is not limited to these precise forms of apparatus and methods, and the changes may be made therein without departing from the scope of the disclosure.

## Claims

1. An aircraft lighting system (10) comprising a visible light communication, VLC, system for communicating visible light and data to and from a plurality of specific locations, comprising:
lighting units (32) provided at the plurality of specific locations within a passenger cabin (26) of an aircraft;
at least one source lighting array (24; 124) located in a centralized location of the aircraft (20) comprising:
a plurality of lighting elements (72) each configured to generate visible light, wherein the plurality of lighting elements are configured for modulation at a rate of at least about 100 megahertz for data transmission purposes; and
a plurality of photodetection devices (74) each configured to detect visible light modulating at a frequency of at least about 100 megahertz; and
a plastic optical fiber, POF, cable (22) having an end in communication with the source lighting array (24, 124) and adapted to provide light and data to the lighting units (32),
wherein the POF cable (22) is adapted to transmit visible light generated by the plurality of lighting elements (72) to the lighting units (32) at the plurality of specific locations and is adapted to transmit visible light from the plurality of specific locations to the plurality of photodetection devices (74);
wherein the POF cable (22) includes a plurality of fiber cores (50),
wherein each of the plurality of lighting elements (72) correspond to one of the plurality of fiber cores (50) of the POF cable and wherein each of the plurality of photodetection devices (74) correspond to one of the plurality of fiber cores (50) of the POF cable; and
wherein the plurality of lighting elements (72) are mounted directly onto a surface of a substrate (70) in a face-down configuration, wherein light emission and detection elements of the lighting elements are placed facing said end of the POF cable.

2. The system of claim 1, wherein the plurality of lighting elements (72) are of the same type and generate visible light of a single color.

3. The system of claim 1, wherein the plurality of lighting elements (72) are configured to generate visible light of at least two different colors.

4. The system of claim 1, wherein the VLC system further comprises an optical circuit in communication with the POF cable.

5. The system of claim 4, wherein the optical circuit includes at least one of an optical switch, an optical coupler, and an optical multiplexer.

6. The system of claim 1, wherein the source lighting array (24; 124) is selected from the group comprising: a micro-pixelated light emitting diode, LED, array and an array of vertical-cavity surface-emitting laser, VCSEL, elements.

## Patentansprüche

1. Flugzeugbeleuchtungssystem (10), umfassend ein System zur Kommunikation mit sichtbarem Licht, VLC, zum Übertragen von sichtbarem Licht und Daten zu und von einer Vielzahl von spezifischen Orten, umfassend:
Beleuchtungseinheiten (32), die an der Vielzahl von spezifischen Stellen innerhalb einer Passagierkabine (26) eines Flugzeugs vorgesehen sind;
mindestens eine Quellbeleuchtungsanordnung (24; 124), die an einer zentralen Stelle des Flugzeugs (20) angeordnet ist, umfassend:
eine Vielzahl von Beleuchtungselementen (72), die jeweils konfiguriert sind, um sichtbares Licht zu erzeugen, wobei die Vielzahl von Beleuchtungselementen konfiguriert ist, um mit einer Rate von mindestens etwa 100 Megahertz für Datenübertragungszwecke zu modulieren; und
eine Vielzahl von Photodetektor-Vorrichtungen (74), die jeweils konfiguriert sind, um sichtbares Licht zu erfassen, das bei einer Frequenz von mindestens etwa 100 Megahertz moduliert ist; und
ein Kunststoff-Lichtwellenleiter-, POF-, Kabel (22) mit einem Ende in Verbindung mit der Quellbeleuchtungsanordnung (24, 124), das angepasst ist, um Licht und Daten den Beleuchtungseinheiten (32) bereitzustellen,
wobei das POF-Kabel (22) angepasst ist, um sichtbares Licht, das durch die Vielzahl von Beleuchtungselementen (72) erzeugt wird, zu den Beleuchtungseinheiten (32) an der Vielzahl von spezifischen Positionen zu übertragen, und angepasst ist, um sichtbares Licht von der Vielzahl von spezifischen Positionen zu der Vielzahl von Photodetektor-Vorrichtungen (74) zu übertragen;
wobei das POF-Kabel (22) eine Vielzahl von Faserkernen (50) aufweist,
wobei jedes der Vielzahl von Beleuchtungselementen (72) einem der Vielzahl von Faserkernen (50) des POF-Kabels entspricht und wobei jedes der Vielzahl von Photodetektor-Vorrichtungen (74) einem der Vielzahl von Faserkernen (50) des POF-Kabels entspricht; und
wobei die Vielzahl von Beleuchtungselementen (72) direkt auf einer Oberfläche eines Substrats (70) in einer nach unten gerichteten Konfiguration montiert ist, wobei Lichtemissions- und Detektionselemente der Beleuchtungselemente gegenüber dem Ende des POF-Kabels angeordnet sind.

2. System nach Anspruch 1, wobei die Vielzahl von Beleuchtungselementen (72) vom gleichen Typ sind und sichtbares Licht einer einzigen Farbe erzeugen.

3. System nach Anspruch 1, wobei die Vielzahl von Beleuchtungselementen (72) konfiguriert ist, um sichtbares Licht von mindestens zwei verschiedenen Farben zu erzeugen.

4. System nach Anspruch 1, wobei das VLC-System ferner eine optische Schaltung in Kommunikation mit dem POF-Kabel umfasst.

5. System nach Anspruch 4, wobei die optische Schaltung mindestens einen aus einem optischen Schalter, einem optischen Koppler und einem optischen Multiplexer aufweist.

6. System nach Anspruch 1, wobei die Quellbeleuchtungsanordnung (24; 124) ausgewählt ist aus der Gruppe, die umfasst: eine mikro-pixelierte lichtemittierende Diode, LED, Anordnung und eine Anordnung von vertikal emittierenden Laserelementen, VCSEL, umfasst.

## Revendications

1. Système d'éclairage d'aéronef (10) comprenant un système de communication de lumière visible, VLC, pour communiquer une lumière visible ainsi que des données à et en provenance d'une pluralité d'endroits spécifiques, comprenant:
des unités d'éclairage (32) prévues à la pluralité d'endroits spécifiques à l'intérieur d'une cabine de passagers (26) d'un aéronef;
au moins un réseau d'éclairage source (24; 124) situé en un endroit centralisé de l'aéronef (20), et comprenant:
une pluralité d'éléments d'éclairage (72) configurés chacun de manière à générer une lumière visible, dans lequel la pluralité d'éléments d'éclairage sont configurés pour une modulation à un taux d'au moins environ 100 mégahertz à des fins de transmission de données; et
une pluralité de dispositifs de photo-détection (74) configurés chacun de manière à détecter une modulation de lumière visible à une fréquence d'au moins environ 100 mégahertz; et
un câble de fibre optique en plastique, POF, (22) qui présente une extrémité en communication avec le réseau d'éclairage source (24, 124) et qui est adapté pour fournir de la lumière ainsi que des données aux unités d'éclairage (32),
dans lequel le câble POF (22) est adapté pour transmettre une lumière visible générée par la pluralité d'éléments d'éclairage (72) aux unités d'éclairage (32) à la pluralité d'endroits spécifiques et est adapté pour transmettre une lumière visible en provenance de la pluralité d'endroits spécifiques à la pluralité de dispositifs de photo-détection (74);
dans lequel le câble POF (22) comprend une pluralité de noyaux de fibre (50),
dans lequel chacun de la pluralité d'éléments d'éclairage (72) correspond à un de la pluralité de noyaux de fibre (50) du câble POF, et dans lequel chacun de la pluralité de dispositifs de photo-détection (74) correspond à un de la pluralité de noyaux de fibre (50) du câble POF; et
dans lequel une pluralité d'éléments d'éclairage (72) sont montés directement sur une surface d'un substrat (70) dans une configuration face vers le bas, dans lequel les éléments d'émission et de détection de lumière des éléments d'éclairage sont placés en face de ladite extrémité du câble POF.

2. Système selon la revendication 1, dans lequel la pluralité d'éléments d'éclairage (72) sont du même type et génèrent une lumière visible d'une seule couleur.

3. Système selon la revendication 1, dans lequel la pluralité d'éléments d'éclairage (72) sont configurés de manière à générer une lumière visible d'au moins deux couleurs différentes.

4. Système selon la revendication 1, dans lequel le système VLC comprend en outre un circuit optique en communication avec le câble POF.

5. Système selon la revendication 4, dans lequel le circuit optique comprend au moins un composant parmi un commutateur optique, un coupleur optique et un multiplexeur optique.

6. Système selon la revendication 1, dans lequel réseau d'éclairage source (24; 124) est sélectionné dans le groupe comprenant un réseau de diodes électroluminescentes, DEL, micro-pixélisées, et un réseau d'éléments laser à émission par la surface et à cavité verticale, VCSEL.
